# EUROPÄISCHE PATENTANMELDUNG

(11) **EP 4 671 140 A2**
(43) Veröffentlichungstag der Anmeldung: **31.12.2025**
(21) Anmeldenummer: 25184872.7
(22) Anmeldetag: 24.06.2025
(51) Int. Cl.: B65B 5/02, B26D 1/16, B26D 1/24, B65B 59/00, B65B 59/02, B65B 61/00

(54) **VORRICHTUNG UND VERFAHREN ZUR HÖHENREDUZIERUNG BEI VERPACKUNGEN**

(30) Priorität: 25.06.2024 DE 102024117827
(71) Anmelder: heinz mayer GmbH, 73271 Holzmaden (DE)
(72) Erfinder: Mayer, Uwe, 73271 Holzmaden (DE)
(74) Vertreter: Witte, Weller & Partner Patentanwälte mbB

(57) **Zusammenfassung**

Eine Vorrichtung (10) und ein Verfahren dienen zur Höhenreduzierung von dünnwandigen Verpackungen (20), die eine Umwandung (66) aufweisen, die einen Kragen (72) ausbildet, der eine Öffnung (68) der Verpackung (20) begrenzt. Die Vorrichtung (10) weist einen Bearbeitungsplatz (38) für eine Verpackung (20), eine Handhabungseinrichtung (40), einen an der Handhabungseinrichtung (40) gehaltenen Schneidkopf (42) und eine Steuereinrichtung (16) zur Steuerung der Handhabungseinrichtung (40) und des Schneidkopfes (42) auf. Der Schneidkopf (42) ist von der Handhabungseinrichtung (40) in zumindest zwei Achsen verfahrbar, um einen überschüssigen Rand (74) des Kragens (72) von der Verpackung (20) zu trennen. Am Schneidkopf (42) sind ein motorisch antreibbares Schneidwerkzeug (44) und ein Gegenhalter (46) gehalten und relativ zueinander zwischen einer ersten Relativposition und einer zweiten Relativposition verfahrbar. Das Schneidwerkzeug (44) und der Gegenhalter (46) sind in der ersten Relativposition einander angenähert, um durch eine schneidende Bewegung des Schneidwerkzeugs (44) den Rand (74) vom Kragen (72) abzutrennen. Das Schneidwerkzeug (44) und der Gegenhalter (46) sind in der zweiten Relativposition voneinander beabstandet, sodass der Schneidkopf (42) in eine Arbeitsstellung in Bezug auf die Verpackung (20) bringbar ist, in der der Kragen (72) der Verpackung (20) zwischen dem Schneidwerkzeug (44) und dem Gegenhalter (46) angeordnet ist.

## Beschreibung

Die vorliegende Offenbarung betrifft eine Vorrichtung und ein Verfahren zur Höhenreduzierung bei Verpackungen, insbesondere zur Höhenreduzierung von dünnwandigen Verpackungen, beispielsweise von Umverpackungen aus Karton.

Karton ist ein übliches Verpackungsmaterial in der Logistik und dominiert beispielsweise den Versandhandel. Karton, Pappe und dergleichen wird genutzt, um Waren einer Sendung zusammenzufassen, sodass beispielsweise für mehrere Artikel nur einmal der Versandaufwand zwischen Lager und Empfänger anfällt. Ferner dienen Umverpackungen zum Schutz der Ware, sodass auch Umverpackungen um lediglich einen Artikel üblich sind. Kartonagen aus Karton und dergleichen benötigen zunächst einmal in einem flachen Zustand wenig Platz, das Volumen wird erst dann benötigt, wenn Ware in der Umverpackung abgelegt wird.

Kartons haben üblicherweise standardisierte Abmessungen, die logistische Abläufe vereinfachen. Dies betrifft beispielsweise Länge, Breite und Höhe der Verpackung. Dies führt jedoch häufig dazu, dass das gegebene Volumen durch die aufzunehmenden Artikel nicht ausgeschöpft wird. Häufig bezieht sich dies auf die verfügbare Höhe des Kartons.

In ungünstigen Fällen wird also ein großes Volumen (Luft) transportiert, wodurch die Gesamtkapazität (beispielsweise Anzahl der Kartons pro Container, Anhänger oder Zustellfahrzeug) sinkt. Dies erhöht insgesamt den Aufwand und den Ressourcenverbrauch für die Logistik.

Es ist daher wünschenswert, das beanspruchte Volumen von Umverpackungen an den tatsächlichen Volumenbedarf der zu transportierenden Waren/Artikel anzupassen. Hierzu sind verschiedene Ansätze im Stand der Technik bekannt.

Ein Ansatz geht dahin, überstehende Bereiche der Seitenwände umzuklappen, um die Gesamthöhe zu reduzieren. Dabei verbleibt der zuvor überstehende Abschnitt in Form einer umgefalteten Lasche beim Karton. Ein solcher Vorgang erfordert das Anritzen und Falten der Faltkanten. Die EP 2 684 802 A1 beschreibt eine einschlägige Vorrichtung und ein einschlägiges Verfahren. Einschlägige Anlagen sind auch aus der EP 2 858 909 B1 und der DE 20 2018 103 599 U1 bekannt. Der Aufwand zur Erzeugung der Faltlaschen umfasst regelmäßig neben der Erzeugung der Faltkanten auch ein Auftrennen des Kartons an den überstehenden vertikalen Kanten, sodass beispielsweise auf Basis einer überstehenden umlaufenden Umwandung vier Faltlaschen gebildet werden. Eigentlich nicht erforderliches Verpackungsmaterial verbleibt bei der Verpackung und erhöht das Gewicht und den Transportaufwand.

Ein anderer Ansatz geht dahin, den umlaufenden Rand eines an seiner Oberseite geöffneten Kartons vollständig abzutrennen, um die Höhe des Kartons zu reduzieren. Die WO 2023/183959 A1 beschreibt eine einschlägige Anlage. Es hat sich gezeigt, dass bestehende Anlagen teilweise recht komplex gestaltet sind, mit aufwendiger Handhabungstechnik, wodurch sich der Platzbedarf und die Kosten erhöhen. Das Abführen des vom verbliebenen Karton gelösten Rands erfordert weitere Handhabungstechnik.

Aus der US 2023/0124423 A1 ist eine automatisierte Vorrichtung zur Größenanpassung von Kartons bekannt, die einen Roboterarm nutzt, der ein Schneidwerkzeug trägt, wobei Abmessungen und eine Füllhöhe des Kartons ermittelt werden, und wobei der Roboterarm das Schneidwerkzeug definiert entlang der Seitenwände des Kartons führt, um den Karton zu schneiden, wodurch die Größe des Kartons angepasst wird. Die US 2023/0124423 A1 schlägt vor, den Rand an einer Seite nicht zu schneiden, damit der Karton mit den teilweise getrennten Rand transportiert werden kann, wobei der Rand anschließen händisch vom Rest des Kartons getrennt wird.

Vor diesem Hintergrund liegt der Offenbarung die Aufgabe zugrunde, eine Vorrichtung und ein Verfahren zur Höhenreduzierung von Verpackungen, insbesondere dünnwandigen Verpackungen wie Umverpackungen aus Karton und dergleichen, anzugeben, mit denen das Leervolumen einer Sendung bzw. eines Pakets wirksam reduziert werden kann.

Vorzugsweise soll eine entsprechende Anlage mit geringem Aufwand realisierbar sein, insbesondere auch im Hinblick auf die Grundfläche und den erforderlichen Bauraum. Die Vorrichtung und das Verfahren sollen möglichst mit geringem Aufwand in bestehende Systeme und Prozesse zur Versandlogistik integrierbar sein.

Die Vorrichtung und das Verfahren sollen sich für die Anwendung bei teilweise mit Waren befüllten Verpackungen eignen, wobei die Waren durch die Höhenreduzierung möglichst nicht beschädigt werden.

Gemäß einem ersten Aspekt bezieht sich die vorliegende Offenbarung auf eine Vorrichtung zur Höhenreduzierung von dünnwandigen Verpackungen, insbesondere von Umverpackungen aus Karton, die Folgendes aufweist:
- einen Bearbeitungsplatz für eine Verpackung, die eine Umwandung aufweist, die einen Kragen ausbildet, der eine Öffnung der Verpackung begrenzt,
- eine Handhabungseinrichtung, insbesondere eine robotische Handhabungseinrichtung,
- einen an der Handhabungseinrichtung gehaltenen Schneidkopf, der von der Handhabungseinrichtung in zumindest zwei Achsen verfahrbar ist, um einen überschüssigen Rand des Kragens von der Verpackung zu trennen,
- eine Steuereinrichtung zur Steuerung der Handhabungseinrichtung und des Schneidkopfes, und
- ein motorisch antreibbares Schneidwerkzeug und einen Gegenhalter, die am Schneidkopf gehalten und relativ zueinander zwischen einer ersten Relativposition und einer zweiten Relativposition verfahrbar sind,
   wobei das Schneidwerkzeug und der Gegenhalter in der ersten Relativposition einander angenähert sind, um durch eine schneidende Bewegung des Schneidwerkzeugs den Rand vom Kragen abzutrennen,
   wobei das Schneidwerkzeug und der Gegenhalter in der zweiten Relativposition voneinander beabstandet sind, sodass der Schneidkopf in eine Arbeitsstellung in Bezug auf die Verpackung bringbar ist, in der der Kragen der Verpackung zwischen dem Schneidwerkzeug und dem Gegenhalter angeordnet ist, und
   wobei in der ersten Relativposition zwischen dem Schneidwerkzeug und dem Gegenhalter der von der Verpackung getrennte Rand zwischen dem Schneidwerkzeug und dem Gegenhalter gehalten und insbesondere gegen ein Herausrutschen gesichert ist.

Die Aufgabe der Offenbarung wird auf diese Weise gelöst. Ein Vorteil der offenbarungsgemäßen Vorrichtung besteht darin, dass mit lediglich einer einzigen Handhabungseinrichtung, beispielsweise mit einem einzigen Industrieroboter, die Höhenreduzierung bei Kartons und ähnlichen Verpackungen vonstattengehen kann. Dies kann sowohl das Abtrennen des Rands mittels Schneiden als auch die Abführung des vom verbliebenen Kragen gelösten Rands umfassen.

Folglich kann es sich bei der Handhabungseinrichtung um eine robotische Handhabungseinrichtung handeln. Dies umfasst beispielsweise Gelenkarmroboter in Form von Knickarmrobotern, SCARA-Robotern (Gelenkarmroboter mit zueinander parallelen Schwenkachsen) oder dergleichen. Die robotische Handhabungseinrichtung kann bodengeführt (also stehender Roboter) oder deckengeführt (also hängender Roboter) sein. Mit anderen Worten hat die robotische Handhabungseinrichtung beispielsweise fünf oder sechs Achsen (üblicherweise rotatorische Achsen, gegebenenfalls ergänzt um wenige Linearachsen) und eine entsprechende Anzahl an Bewegungsfreiheitsgraden. Die Handhabungseinrichtung ist zumindest dazu befähigt, den Schneidkopf am Umfang des Kragens um dessen Umfang herum zu bewegen.

Die offenbarungsgemäße Vorrichtung ermöglicht es, die Höhe von Verpackungen präzise zu reduzieren, indem ein überschüssiger Rand des Verpackungskragens umlaufend abgeschnitten wird. Dies kann dazu beitragen, dass weniger Luft und im Verhältnis mehr tatsächliche Ware transportiert wird, wodurch die Effizienz des Transports verbessert wird.

Die Vorrichtung und das Verfahren sind so konzipiert, dass sie mit minimalem Aufwand in bestehende Systeme und Prozesse der Versandlogistik integriert werden können. Dies umfasst auch die Handhabung und das Abführen des abgetrennten Verpackungsmaterials. Die Grundfläche (Footprint) und insgesamt der bauliche Aufwand für die Vorrichtung sind deutlich reduziert.

Insgesamt erhöht sich die Effizienz entlang der Logistikkette. Auf Basis einheitlicher Verpackungstypen lassen sich individualisierte Verpackungen erzeugen, die an die Höhe der verpackten Waren/Artikel angepasst sind. Dies ist auch günstig mit Blick auf den Ressourcenverbrauch.

Das Schneidwerkzeug und der Gegenhalter sind relativ zueinander verfahrbar. Dies umfasst beispielsweise Ausgestaltungen, in denen das Schneidwerkzeug in Bezug auf den Schneidkopf fest positioniert ist, wobei dann der Gegenhalter aktiv in Bezug auf das Schneidwerkzeug bewegt werden kann. Auch andere Zuordnungen sind denkbar, etwa einen fest in Bezug auf den Schneidkopf positionierten Gegenhalter in Kombination mit einem hierzu verfahrbaren Schneidkopf. Auch die Verfahrbarkeit sowohl des Gegenhalters als auch des Schneidkopfes ist denkbar.

Die erste Relativposition kann auch als Naheposition bezeichnet werden, wobei das Schneidwerkzeug und der Gegenhalter in dieser Position aneinander angenähert sind. Die zweite Relativposition kann auch als Abstandsposition bezeichnet werden, wobei das Schneidwerkzeug und der Gegenhalter in dieser Position voneinander beabstandet sind. Der Abstand zwischen dem Schneidwerkzeug und dem Gegenhalter in der ersten Relativposition ist größer als der Abstand zwischen dem Schneidwerkzeug und dem Gegenhalter in der zweiten Relativposition.

Bei den Verpackungen handelt es sich üblicherweise um dünnwandige Verpackungen, beispielsweise um Kartons, die als Versandkartons verwendbar sind. Solche Verpackungen bestehen überwiegend aus Material wie Pappe, Karton und dergleichen. Verpackungen im Sinne der vorliegenden Offenbarung sind üblicherweise kistenartige oder boxartige Verpackungen, die ein quaderförmiges Volumen zur Aufnahme von Artikeln oder Waren bereitstellen. Die Verpackung kann um einen Deckel ergänzt werden, der eine durch den Kragen umschlossene Öffnung an der Oberseite der Verpackung abdeckt.

Der Kragen ist üblicherweise ein umlaufender, geschlossener Kragen. Der Kragen kann auch als Stehkragen bezeichnet werden. Eine obere Kante des Kragens bildet beispielsweise ein Rechteck. Mit anderen Worten weist also die Verpackung an ihrer Oberseite nicht zwei oder vier einzelne Laschen auf, die an ihren vertikalen Kanten gerade nicht miteinander verbunden sind. Vielmehr bildet der geschlossene Kragen eine Art Schlauch (mit viereckigem/rechteckigem Querschnitt) mit vertikaler Erstreckung. Mit anderen Worten wird der Kragen durch die Umwandung der Verpackung gebildet. Die Umwandung besteht beispielsweise aus vier miteinander verbundenen Seitenwänden der Verpackung. Die Seitenwände können auch als Vorderseite, Rückseite, rechte Seite und linke Seite bezeichnet werden.

Der abzutrennende Rand ist ein oberer Abschnitt des Kragens, der beispielsweise bei einer gegebenen Bauhöhe der Verpackung und einer deutlich geringeren Füllhöhe (Höhe der Artikel innerhalb der Verpackung) nicht für Verpackungszwecke benötigt wird. Üblicherweise wird der Rand durch einen umlaufenden horizontalen Schnitt mit dem Schneidwerkzeug gebildet. Der Rand kann sodann vom übrig gebliebenen Kragen, dessen Höhe reduziert wurde, gelöst und abgeführt werden.

Der Ansatz zur Höhenreduzierung gemäß der vorliegenden Offenbarung bietet sich insbesondere für solche Kartons und Verpackungen an, die an ihrem oberen Ende keine Faltlaschen aufweisen, sondern stattdessen einen umlaufenden Kragen mit geschlossenem Querschnitt. Mit anderen Worten bildet der Kragen bei Betrachtung von oben einen (viereckigen) Ring.

Mit dem Schneidkopf kann ein überschüssiger Rand des Kragens von der Verpackung getrennt werden, indem der Schneidkopf mit dem Schneidwerkzeug um den Umfang der Verpackung herumgeführt wird. Beispielsweise ist dabei das Schneidwerkzeug außen und der Gegenhalter innen in der Verpackung angeordnet, wobei dazwischen der Kragen positioniert ist. Es ist auch vorstellbar, das Schneidwerkzeug innen und den Gegenhalter außen in Bezug auf den Kragen der Verpackung anzuordnen.

Bei dem Schneidwerkzeug handelt es sich beispielsweise um ein rotatorisch durch einen Drehantrieb angetriebenes Schneidwerkzeug. Grundsätzlich ist auch die Verwendung eines drehoszillatorisch angetriebenen Schneidwerkzeugs denkbar. Das Schneidwerkzeug kann auch als Schneidmesser bezeichnet werden. Beispielsweise ist das Schneidwerkzeug als Messerscheibe mit kreisförmigem Umfang gestaltet. Gemäß einer beispielhaften Ausgestaltung weist das Schneidwerkzeug eine umlaufende Schneide auf, aber keine Verzahnung. Es ist jedoch auch vorstellbar, ein Schneidwerkzeug mit einer Verzahnung zu nutzen.

Beim Schneidvorgang ist das Schneidwerkzeug in der Regel horizontal oder nahezu horizontal orientiert, demgemäß ist die Drehachse des Schneidwerkzeugs beim Schneidvorgang in der Regel vertikal oder nahezu vertikal orientiert. Gleichermaßen ist der Gegenhalter beim Schneidvorgang in der Regel vertikal oder nahezu vertikal orientiert. Eine Haupterstreckungsrichtung des Gegenhalters ist beispielsweise parallel zur Drehachse des Schneidwerkzeugs.

Der Gegenhalter kann beim Schneidvorgang den Kragen mitsamt dem abzutrennenden Rand abstützen, sodass keine übermäßigen Deformationen durch den Eingriff des Schneidwerkzeugs auftreten. Der Gegenhalter kann jedoch auch dazu genutzt werden, nach dem Schneidvorgang, also nach dem Abtrennen des Rands, den Rand gegen den Gegenhalter zu drücken und damit am Schneidkopf festzuhalten. Der Gegenhalter dient dann als Anschlag.

Die Steuereinrichtung kann zum einen zur Steuerung der Bewegungsbahn der Handhabungseinrichtung genutzt werden. Auf diese Weise werden Bewegungspfade und Orientierungen für den Schneidkopf und das daran aufgenommene Schneidwerkzeug sowie den Gegenhalter definiert. Die Steuereinrichtung kann auch mit geeigneter Messtechnik, wie mit Erfassungseinrichtungen mit Sensoren und ähnlichem, gekoppelt sein, um Abmessungen der Verpackung und dergleichen zu ermitteln. Insbesondere kann die Steuereinrichtung dazu ausgebildet sein, den Schneidkopf entlang einer Trennlinie entlang des Kragens der Verpackung zu verfahren, um einen Rand des Kragens abzutrennen. Die Position der Trennlinie bestimmt die Höhe des abzutrennenden Rands und die Höhe des verbleibenden Kragens der Verpackung. Die Höhe kann unter Berücksichtigung erfasster Höhen (Bauhöhe der Verpackung, Füllhöhe aufgrund von Artikeln innerhalb der Verpackung) und dergleichen ermittelt werden. Die Steuereinrichtung ist beispielsweise als numerische Steuerung (NC-Steuerung) zur Steuerung von Bewegungen und Betriebszuständen ausgebildet. Die Steuereinrichtung ist auch dazu befähigt, eine Relativbewegung zwischen dem Gegenhalter und dem Schneidwerkzeug zur Bewegung zwischen der ersten Relativposition und der zweiten Relativposition zu steuern.

Gemäß einer weiteren beispielhaften Ausgestaltung weist die Vorrichtung ferner einen Abgabeplatz zur Abgabe des von der Verpackung getrennten Rands auf, wobei die Handhabungseinrichtung dazu ausgebildet ist, den Schneidkopf zwischen dem Bereitstellungsplatz und dem Abgabeplatz zu verfahren, und wobei das Schneidwerkzeug und der Gegenhalter am Abgabeplatz in die zweite Relativposition bringbar sind, um dort den Rand freizugeben.

Die zweite Relativposition ist beispielsweise eine beabstandete Position zwischen dem Schneidwerkzeug und dem Gegenhalter. Wenn das Schneidwerkzeug und der Gegenhalter hinreichend voneinander beabstandet sind, kann der Rand des Kartons vom Schneidkopf abgegeben werden. Die voneinander beabstandete zweite Relativposition umfasst nicht zwingend genau denselben Abstand sowohl für die Abgabe des Rands als auch das Verbringen des Schneidkopfes in die Arbeitsstellung, in der der Kragen zwischen dem Schneidwerkzeug und dem Gegenhalter angeordnet ist.

In beispielhaften Ausführungsformen bedarf es daher keinerlei separater Handhabungstechnik, um den Rand vom verbliebenen Karton weg zu führen. Dies schließt nicht aus, dass am Abgabeplatz weitere Fördertechnik angeordnet ist, etwa eine Förderbahn, Rollenbahn oder dergleichen. Der Transfer des Rands zwischen dem Bearbeitungsplatz und dem Abgabeplatz erfolgt durch die Handhabungseinrichtung mit dem Schneidkopf, der auch für das Abtrennen des Rands genutzt wird. Dies verkürzt die Zykluszeiten, weil der Rand nicht zwischen verschiedenen Handhabungseinrichtungen übergeben werden muss.

In der ersten Relativposition zwischen dem Schneidwerkzeug und dem Gegenhalter ist der von der Verpackung getrennte Rand zwischen dem Schneidwerkzeug und dem Gegenhalter gehalten und insbesondere gegen ein Herausrutschen gesichert. Das vereinfacht die Automatisierung des Trennvorgangs, umfassend auch die Abgabe des abgetrennten Rands. Der abgetrennte Rand wird nach dem Schneidvorgang zunächst noch am Schneidkopf festgehalten. Im Gegensatz zur Lehre der US 2023/0124423 A1 kann die Vorrichtung nicht nur zum partiellen Trennen des Rands, sondern auch zum Abführen und zur Abgabe des Rands genutzt werden. Die kann automatisiert erfolgen, ein manuelles Trennen des Rands vom Karton bzw. eine Bewegung des Kartons mit nur teilweise geschnittenem Rand sind nicht erforderlich.

Es versteht sich, dass am Schneidkopf auch zusätzliche Elemente zum Festhalten des Rands verbaut sein können, die für eine zusätzliche Lagesicherung des Rands beim Transfer zwischen dem Bearbeitungsplatz und dem Abgabeplatz sorgen.

Gemäß einer weiteren beispielhaften Ausgestaltung taucht das Schneidwerkzeug in der ersten Relativposition in eine Ausnehmung im Gegenhalter ein. Auf diese Weise wird sichergestellt, dass der Karton im Bereich des Kragens tatsächlich auch durchgeschnitten wird, damit der Rand abgetrennt werden kann. Beispielsweise taucht das als Messerscheibe gestaltete Schneidwerkzeug zumindest zeitweise in eine Vertiefung (Rille) am Gegenhalter ein, um den Rand sicher abzutrennen. Dieses Eintauchen findet unbeschadet dessen statt, dass das Schneidwerkzeug während des Schneidvorgangs bewegt wird, insbesondere rotiert wird.

Gemäß einer weiteren beispielhaften Ausgestaltung ist der Gegenhalter stabförmig gestaltet und bei seinem freien Ende mit zwei oder mehr Drehlagern versehen, die insbesondere zur Bereitstellung zumindest einer Ausnehmung zueinander versetzt sind. Die Drehlager dienen zur Abstützung und können an der Umwandung des Kartons anliegen, wenn der Rand vom Kragen abgetrennt wird. Das Schneidwerkzeug kann in eine Lücke zwischen zwei axial zueinander versetzten Drehlagern eintauchen. Das freie Ende kann auch als das vom Schneidkopf abgewandte Ende des Gegenhalters bezeichnet werden.

Gemäß einer weiteren beispielhaften Ausgestaltung trägt der Schneidkopf ferner ein Haltestück, das zwischen einer eingefahrenen Stellung und einer ausgefahrenen Stellung relativ zum Gegenhalter verfahrbar ist, wobei das Haltestück in der ausgefahrenen Stellung an den Gegenhalter angenähert ist, um den Rand der Verpackung in einem Spalt zwischen dem Haltestück und dem Gegenhalter zu sichern. Mit anderen Worten ist also eine zusätzliche Lagesicherung zum Festhalten des abgetrennten Rands am Schneidkopf vorgesehen. In beispielhaften Ausgestaltungen ist das Haltestück während des Schneidvorgangs in der eingefahrenen Stellung, damit der Schneidkopf weiterhin umfänglich entlang der Trennlinie relativ zur Verpackung bewegt werden kann. Wenn jedoch die Trennlinie vollständig aufgeschnitten ist, kann das Haltestück aktiviert und in die ausgefahrene Stellung gebracht werden, um den - mehr oder weniger schlaffen - Rand zu sichern. Sobald der Rand vom verbliebenen Kragen abgetrennt ist, reduziert sich dessen Stabilität. Eine zusätzliche Lagefixierung am Schneidkopf kann die Prozesssicherheit beim Transfer des Rands zwischen dem Bearbeitungsplatz und dem Abgabeplatz sowie bei der Abgabe des Rands erhöhen.

Mit anderen Worten sind Ausgestaltungen denkbar, bei denen der Schneidkopf zwei zusätzliche Bewegungsfreiheitsgrade/Achsen aufweist. Eine erste Achse ermöglicht die Relativbewegung zwischen dem Schneidwerkzeug und dem Gegenhalter. Eine zweite Achse ermöglicht die Relativbewegung zwischen dem Haltestück und dem Gegenhalter. Die Achsen sind beispielsweise als lineare Achsen gestaltet. Die Achsen umfassen beispielsweise elektrische oder fluidische Antriebe. Beispielsweise weisen die Achsen Pneumatikzylinder oder dergleichen auf.

Gemäß einer weiteren beispielhaften Ausgestaltung weist das Haltestück einen Klemmabschnitt auf, der dazu ausgebildet ist, in der ausgefahrenen Stellung des Haltestücks den Rand gegen den Gegenhalter zu drücken. Auf diese Weise ergibt sich eine kraftschlüssige Lagesicherung für den Rand am Gegenhalter. Der Klemmabschnitt weist beispielsweise in Richtung auf den Gegenhalter eine konkave Gestaltung auf, sodass sich ein günstiges Kontaktverhältnis für die Lagesicherung des Rands zwischen dem Klemmabschnitt und dem Gegenhalter ergibt. Der Gegenhalter ist beispielsweise stabförmig gestaltet.

Gemäß einer weiteren beispielhaften Ausgestaltung ist das Haltestück während des Trennvorgangs in der eingefahrenen Stellung und zur Handhabung des Rands in die ausgefahrene Stellung verfahrbar. Während des Trennvorgangs soll das Haltestück den Rand nicht gegen den Gegenhalter drücken, damit der Schneidkopf entlang des Kragens bewegt werden kann.

Gemäß einer weiteren beispielhaften Ausgestaltung ist das Haltestück zur Abgabe des von der Verpackung getrennten Rands aus der ausgefahrenen Stellung in die eingefahrene Stellung verfahrbar. Dies kann beispielsweise oberhalb des Abgabeplatzes erfolgen, damit der Rand definiert vom Schneidkopf abgegeben werden kann. Die Abgabe des Rands kann schwerkraftunterstützt erfolgen. Mit anderen Worten kann der Rand beim Abgabeplatz abgeworfen werden.

Gemäß einer weiteren beispielhaften Ausgestaltung weist die Vorrichtung eine Erfassungseinrichtung auf, insbesondere eine Erfassungseinrichtung mit einem oder mehreren optischen Sensoren, zur Erfassung einer Bauhöhe der Verpackung und zur Erfassung einer Füllhöhe innerhalb der Verpackung, wobei die Steuereinrichtung dazu ausgebildet ist, in Abhängigkeit von der Bauhöhe und der Füllhöhe eine Höhe des abzutrennenden Rands der Verpackung zu ermitteln und den Schneidkopf entsprechend mit der Handhabungseinrichtung zu positionieren.

Beispielsweise ist zumindest ein Sensor vorgesehen, mit dem die Bauhöhe der Verpackung und/oder die Füllhöhe innerhalb der Verpackung bestimmbar ist. Auf diese Weise kann ermittelt werden, wie viel vom Kragen als Rand abgeschnitten werden kann. Die Füllhöhe bezieht sich auf die Höhe von Artikeln/Waren in der Verpackung. Die Bauhöhe und die Füllhöhe können allgemein als Abmessungen der Verpackung bezeichnet werden.

Gemäß einer weiteren beispielhaften Ausgestaltung ist die Erfassungseinrichtung ferner zur Ermittlung weiterer Abmessungen der Verpackung, insbesondere zur Erfassung einer Breite und einer Länge, ausgebildet. Es ist vorstellbar, verschiedene Sensoren vorzusehen, die spezifische Abmessungen (Länge, Breite, Bauhöhe, Füllhöhe und dergleichen) ermitteln. Auf Basis der ermittelten Abmessungen lässt sich ein Bewegungspfad für den Schneidkopf definieren, auf dieser Basis lassen sich Steuerbahnen für die Handhabungseinrichtung ermitteln.

Die Erfassungseinrichtung erlaubt eine genaue Bestimmung der Abmessungen (Länge, Breite, Höhe) der zu bearbeitenden Verpackung. Die Handhabungseinrichtung ist flexibel ansteuerbar, so dass die Bewegungsbahn des Schneidkopfes einfach an die gegebenen Abmessungen angepasst werden kann. Auf diese Weise ist die Vorrichtung für verschiedenste Kartongrößen (betreffend u.a. die Länge und die Breite der Kartons) geeignet. Die Vorrichtung ist flexibel einsetzbar, im Extremfall können aufeinander folgende Verpackungen stets unterschiedliche Abmessungen (Länge, Breite, Höhe) aufweisen, wobei individuell eine Anpassung an die chaotische Zuführung ermöglicht ist.

Die Flexibilität umfasst auch die individuelle Erfassung der Bauhöhe (Ist-Höhe) und der Füllhöhe der Verpackung, auf deren Basis ermittelt wird, welcher Teil vom Rand abgetrennt werden soll, um die Höhe der Verpackung auf die neue Soll-Höhe zu reduzieren. Es sind verschiedene Zielsetzungen für die Ermittlung der Soll-Höhe vorstellbar. Eine erste Strategie folgt beispielsweise dem Ziel, das Verpackungsvolumen so weit wie möglich zu reduzieren, auch wenn sich hieraus nach der Höhenreduzierung eine Vielzahl unterschiedlicher Höhen ergibt. Eine weitere Strategie folgt beispielsweise dem Ziel, das Verpackungsvolumen zu reduzieren, dabei aber bestimmte Gruppen von Verpackungen mit einheitlicher Höhe zu erzeugen, was gegebenenfalls zu Vorteilen bei der weiteren Logistik führt.

Gemäß einer weiteren beispielhaften Ausgestaltung weist die Vorrichtung ferner einen Bereitstellungsplatz für Verpackungen auf, der dem Bearbeitungsplatz vorgelagert ist, wobei am Bereitstellungsplatz mit der Erfassungseinrichtung zumindest eine oder mehrere Abmessungen der Verpackung ermittelt werden, bevor die Verpackung zum Bearbeitungsplatz transferiert wird. Auf diese Weise reduziert sich die Taktzeit, weil die Erfassung zumindest teilweise nicht am Bearbeitungsplatz erfolgt.

Hinsichtlich einer globalen Transferrichtung für Verpackungen durch die Vorrichtung ist der Bearbeitungsplatz stromabwärts vom Bereitstellungsplatz angeordnet. Demgemäß ist der Bereitstellungsplatz stromaufwärts vom Bearbeitungsplatz angeordnet. Der zusätzliche Abgabeplatz dient zum Ausschleusen der abgetrennten Ränder, diese verlassen somit die globale Transferrichtung. Die Angabe "stromabwärts" ist gleichgerichtet mit der globalen Transferrichtung. Die Angabe "stromaufwärts" ist entgegengerichtet zur globalen Transferrichtung.

Gemäß einer weiteren beispielhaften Ausgestaltung weist die Vorrichtung ferner eine Förderbahn, insbesondere eine Rollenbahn, zum Transfer von Verpackungen auf, wobei entlang der Förderbahn zumindest ein Anschlag angeordnet ist, der zwischen einer eingerückten und einer ausgerückten Stellung verfahrbar ist, um eine zu bearbeitende Verpackung bedarfsweise am Bearbeitungsplatz anzuhalten.

Auf diese Weise kann eine Mehrzahl von Verpackungen automatisiert und taktweise die Vorrichtung durchfahren. Es ist denkbar, den Bearbeitungsplatz direkt in die Förderbahn zu integrieren. Es ist auch vorstellbar, den Bearbeitungsplatz neben der Förderbahn anzuordnen, sodass vor der Bearbeitung zur Höhenreduzierung ein Ausschleusen der Verpackung erfolgt, und dass nach der Höhenreduzierung ein Einschleusen der Verpackung in die Förderbahn erfolgt.

Gemäß einer weiteren beispielhaften Ausgestaltung ist entlang der Förderbahn ein Längsanschlag angeordnet, der insbesondere vertikal zwischen einer in die Förderbahn eingefahrenen Position und einer aus der Förderbahn ausgefahrenen Position verfahrbar ist. Auf diese Weise können Verpackungen definiert am Bearbeitungsplatz angehalten und für einen weiteren Transport nach der Bearbeitung freigegeben werden. Beispielsweise ist der Längsanschlag bei einer als Rollenbahn gestalteten Förderbahn zwischen zwei benachbarten Rollen in die Förderbahn einrückbar.

Gemäß einer weiteren beispielhaften Ausgestaltung sind entlang der Förderbahn zwei einander zugewandte Querführungen angeordnet, deren Abstand durch eine Bewegung zumindest einer der beiden Querführungen veränderbar ist, um Verpackungen zwischen den beiden Querführungen festzuhalten oder freizugeben. Es sind Gestaltungen vorstellbar, bei denen eine der beiden Querführungen (quer zur Transferrichtung) aktiv in Bezug auf die andere Querführung bewegt werden kann. Es sind Gestaltungen vorstellbar, bei denen beide Querführungen aufeinander zu und voneinander wegbewegt werden können.

Mit dem Längsanschlag und den Querführungen kann die Verpackung in Bezug auf eine Positionsreferenz platziert werden. Beispielhaft dient der Längsanschlag als Positionsreferenz in der Transferrichtung. Quer zur Transferrichtung können die Querführungen eine Positionsreferenz bereitstellen. Die beiden Querführungen können eine Klemmung der Verpackung bewirken, die dann in einer definierten Position für die Bearbeitung mit dem Schneidkopf bereitgestellt ist. Der Längsanschlag und/oder die Querführungen sind beispielsweise beim Bearbeitungsplatz angeordnet, um dort Verpackungen zu Bearbeitungszwecken festzuhalten.

Wenn zwei Querführungen synchron aufeinander zu fahren, wird eine Verpackung mittig geklemmt, sodass sich auch in der Querrichtung eine Positionsreferenz ergibt. Wenn eine Querführung fix und eine andere beweglich ist, ergibt sich ebenso eine Positionsreferenz in der Querrichtung.

Gemäß einer weiteren beispielhaften Ausgestaltung weist die Vorrichtung ferner eine Schärfestation zum Schärfen des Schneidwerkzeugs auf, wobei die Schärfestation innerhalb des Bewegungsbereichs der Handhabungseinrichtung und insbesondere innerhalb einer Einhausung der Vorrichtung angeordnet ist. Auf diese Weise kann das Schneidwerkzeug mit geringem Aufwand innerhalb der Vorrichtung ohne zusätzliche Rüstvorgänge geschärft werden. Es sind Schärfestationen mit feststehendem Werkzeug und solche mit angetriebenen (üblicherweise rotierenden) Werkzeugen vorstellbar. Der Bewegungsbereich der Handhabungseinrichtung ist derjenige Bereich, in dem der Schneidkopf mit dem Schneidwerkzeug platziert werden kann. Handhabungseinrichtung mit kartesischer Kinematik haben üblicherweise einen quaderförmigen Bewegungsbereich. Handhabungseinrichtungen in Form von Gelenkarmrobotern und dergleichen haben gegebenenfalls komplex geformte Bewegungsbereiche. Weil die zu bearbeitenden Verpackungen regelmäßig einen rechteckigen Grundriss aufweisen, steht üblicherweise genügend freier Bewegungsraum für die Handhabungseinrichtung zur Verfügung. Dort kann dann die Schärfestation ohne nachteilige Auswirkungen auf die Handhabung der Verpackungen positioniert werden.

Gemäß einem weiteren Aspekt bezieht sich die vorliegende Offenbarung auf ein Verfahren zur Höhenreduzierung von dünnwandigen Verpackungen, insbesondere von Umverpackungen aus Karton, mit den folgenden Schritten:
- Bereitstellung einer Handhabungseinrichtung, insbesondere einer robotischen Handhabungseinrichtung, zur Bewegung eines an der Handhabungseinrichtung gehaltenen Schneidkopfes in zumindest zwei Achsen,
   wobei am Schneidkopf ein motorisch antreibbares Schneidwerkzeug und ein Gegenhalter gehalten und relativ zueinander zwischen einer ersten Relativposition und einer zweiten Relativposition verfahrbar sind,
   wobei das Schneidwerkzeug und der Gegenhalter in der ersten Relativposition einander angenähert sind, und
   wobei das Schneidwerkzeug und der Gegenhalter in der zweiten Relativposition voneinander beabstandet sind,
- Bereitstellung einer Verpackung an einem Arbeitsplatz, die eine Umwandung mit einer oder mehreren Seitenwänden aufweist, die einen Kragen ausbildet, der eine Öffnung der Verpackung begrenzt,
- Bewegen des Schneidkopfes in eine Arbeitsstellung in Bezug auf die Verpackung, in der der Kragen der Verpackung zwischen dem Schneidwerkzeug und dem Gegenhalter angeordnet ist, in der zweiten Relativposition zwischen dem Schneidwerkzeug und dem Gegenhalter, und
- Verfahren des sich in der Arbeitsstellung befindenden Schneidkopfes entlang des Kragens, um durch eine schneidende Bewegung des Schneidwerkzeugs einen überschüssigen Rand des Kragens von der Verpackung zu trennen, in der ersten Relativposition zwischen dem Schneidwerkzeug und dem Gegenhalter,
   wobei in der ersten Relativposition zwischen dem Schneidwerkzeug und dem Gegenhalter der von der Verpackung getrennte Rand zwischen dem Schneidwerkzeug und dem Gegenhalter gehalten und insbesondere gegen ein Herausrutschen gesichert ist.

Auch auf diese Weise wird die der Offenbarung zugrunde liegende Aufgabe gelöst. In einer beispielhaften Ausgestaltung nutzt das Verfahren eine offenbarungsgemäße Vorrichtung. Es versteht sich, dass auch das offenbarungsgemäße Verfahren analog zu den hierin beschriebenen Ausgestaltungen und Weiterbildungen der offenbarungsgemäßen Vorrichtung weitergebildet sein kann.

Insbesondere wird der Schneidkopf entlang des Kragens vollständig am Umfang des Kragens um diesen herum verfahren, um den Rand in einem Stück abzutrennen. Es versteht sich, dass das Verfahren weitere Schritte umfassen kann, beispielsweise einen oder mehrere Erfassungsschritte zu Erfassung von Abmessungen der Verpackung. Dies bezieht sich insbesondere auf die Erfassung einer Bauhöhe und/oder einer Füllhöhe, zu Ermittlung einer Höhe des abzutrennenden Rands.

Ferner kann das Verfahren einen Schritt umfassen, in dem der gerade abgetrennte Rand gezielt durch ein Haltestück am Gegenhalter fixiert wird, damit der Rand mit dem Schneidkopf durch eine entsprechende Bewegung der Handhabungseinrichtung direkt zu einem Abgabeplatz transferiert werden kann. Ein weiterer Schritt kann dort die Abgabe des gelösten Rands umfassen, beispielsweise das Abwerfen des von der Verpackung gelösten Rands durch Freigabe des Rands vom Schneidkopf.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Erfindung ergeben sich aus der nachfolgenden Beschreibung und Erläuterung mehrerer beispielhafter Ausführungsformen unter Bezugnahme auf die Zeichnungen. Es zeigen:
- Fig. 1:: eine perspektivische Ansicht einer mit einer Einhausung versehenen Vorrichtung zur Höhenreduzierung;
- Fig. 2:: eine perspektivische Teilansicht der Vorrichtung gemäß Fig. 1 in abweichender Orientierung, wobei die Einhausung ausgeblendet ist;
- Fig. 3:: eine perspektivische Ansicht eines von einer Handhabungseinrichtung gehaltenen Schneidkopfes;
- Fig. 4:: eine weitere Ansicht der Anordnung gemäß Fig. 3 in abweichender Orientierung;
- Fig. 5:: eine Seitenansicht eines Schneidkopfes mit Schneidwerkzeug, Gegenhalter und Haltestück in einem ersten Betriebszustand;
- Fig. 6:: eine weitere Seitenansicht der Anordnung gemäß Fig. 5 in einem zweiten Betriebszustand;
- Fig. 7:: eine weitere Seitenansicht der Anordnung gemäß Fig. 5 in einem dritten Betriebszustand;
- Fig. 8:: eine weitere Seitenansicht der Anordnung gemäß Fig. 5 in einem vierten Betriebszustand;
- Fig. 9:: eine vereinfachte schematische Ansicht (von unten) auf eine Umwandung einer Verpackung zur Veranschaulichung einer Bewegungsbahn für einen Schneidkopf zum Abtrennen eines Randes von der Verpackung;
- Fig. 10:: eine vereinfachte schematische Seitenansicht einer Anordnung mit einem Schneidkopf, an dem ein abgetrennter Rand einer Verpackung festgelegt ist; und
- Fig. 11:: ein vereinfachtes Blockdiagramm zur Veranschaulichung einer beispielhaften Ausgestaltung eines Verfahrens zur Höhenreduzierung von dünnwandigen Verpackungen.

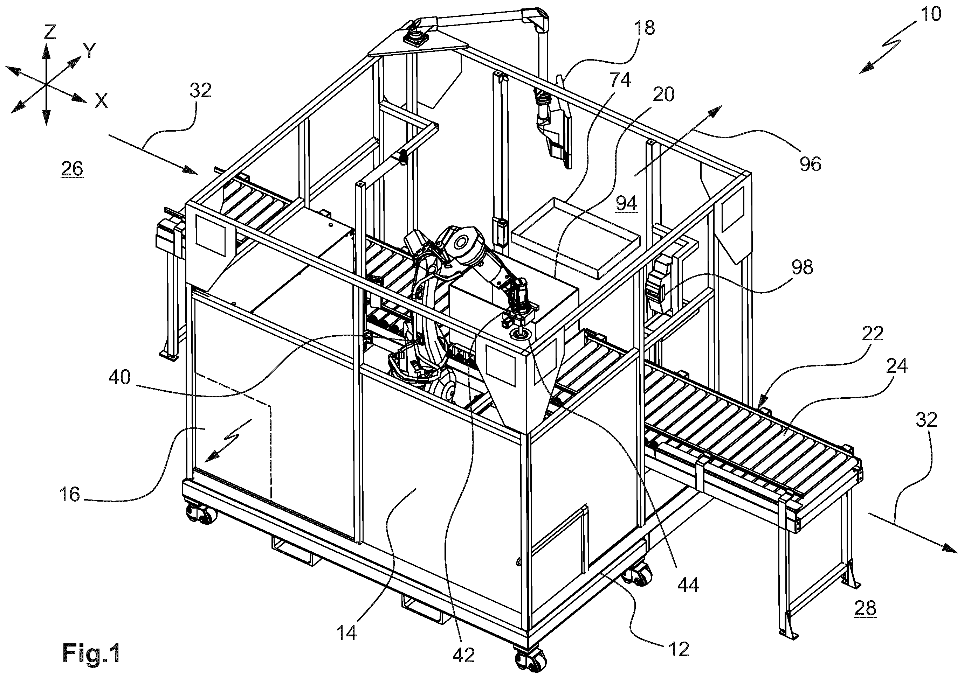

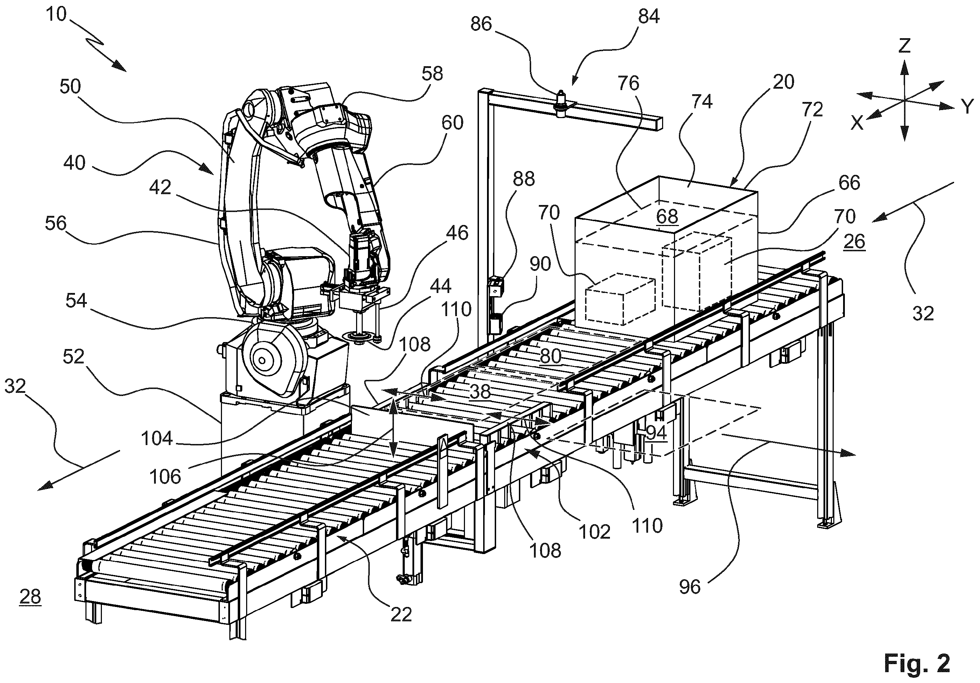

Die Figuren 1 und 2 veranschaulichten anhand perspektivischer Darstellungen eine beispielhafte Ausgestaltung einer insgesamt mit 10 bezeichneten Vorrichtung zur Höhenreduzierung von Verpackungen, insbesondere von Kartons und dergleichen.

Die Figuren 1 und 2 weisen unterschiedliche Ansichtsorientierungen auf. Ein mit X-Y-Z-bezeichnetes Koordinatensystem (Rechte-Hand-Regel) dient zur globalen Orientierung. Ein mit X bezeichneter Doppelpfeil bezeichnet allgemein eine Längenerstreckung oder Längsrichtung (vergleiche auch Transferrichtung). Ein mit Y bezeichneter Doppelpfeil bezeichnet allgemein eine Querrichtung oder Quererstreckung (vergleiche auch Breite). Ein mit Z bezeichneter Doppelpfeil beschreibt allgemein eine Höhenrichtung oder Höhenerstreckung.

Die Vorrichtung 10 weist ein Gestell 12 auf, das auf einem Boden/Untergrund ruht. Im Ausführungsbeispiel ist eine Einhausung 14 vorgesehen (in Fig. 2 ausgeblendet), die insbesondere aus Bedienerschutzgründen vorgesehen ist. In Fig. 1 ist eine Steuereinrichtung 16 angedeutet, ferner eine mit 18 bezeichnete Bedienerschnittstelle. Die Steuern Richtung 16 dient zur Steuerung von Komponenten und Funktionen der Vorrichtung 10. Über die Bedienerschnittstelle 18 kann ein Bediener die Vorrichtung 10 einrichten und steuern. Die Vorrichtung 10 ist zumindest in beispielhaften Ausgestaltungen für einen automatisierten Betrieb eingerichtet.

Die Vorrichtung 10 dient zur Höhenreduzierung bei Verpackungen 20. Bei den Verpackungen handelt es sich beispielhaft um einseitig (oben) geöffnete Kartons und ähnliche dünnwandige Verpackungen. Insbesondere handelt es sich um Umverpackungen.

Die Verpackungen 20 werden entlang einer Förderbahn 22 zwischen einer Zuführung 26 und einer Abführung 28 durch die Vorrichtung 10 hindurch transferiert. Die Förderbahn 22 ist beispielhaft als Rollenbahn 24 ausgebildet. Es versteht sich, dass auch andere Gestaltungen vorstellbar sind, beispielsweise Förderbänder, Kombinationen aus Förderbändern und Rollenbahnen, und Ähnliches.

Eine (globale) Transferrichtung oder Förderrichtung ist in den Figuren 1 und 2 mit 32 bezeichnet. Eine Bewegung in der Transferrichtung 32 ist stromabwärts gerichtet. Eine Bewegung entgegen der Transferrichtung 32 wäre stromaufwärts gerichtet.

Verpackungen 20 können an einem Bearbeitungsplatz 38 (in Fig. 2 mittels gestrichelter Linien angedeutet) bearbeitet werden, um eine Bauhöhe der Verpackungen zu reduzieren. Zu diesem Zweck steht eine Handhabungseinrichtung 40 bereit, die einen Schneidkopf 42 trägt. Die Handhabungseinrichtung 40 ist beispielhaft als robotische Handhabungseinrichtung gestaltet. Dies umfasst beispielsweise Industrieroboter mit serieller Kinematik (zum Beispiel Gelenkarmroboter, Knickarmroboter, SCARA-Roboter und dergleichen).

Der Schneidkopf 42 kann auch als Endeffektor der Handhabungseinrichtung 40 bezeichnet werden. Der Schneidkopf 42 weist ein Schneidwerkzeug 44 und einen Gegenhalter 46 auf, die miteinander zusammenwirken, um die Höhe der Verpackungen 20 am Bearbeitungsplatz 38 zu reduzieren.

Die Handhabungseinrichtung 40 ist im Ausführungsbeispiel als Knickarmroboter 50 gestaltet, vergleiche Fig. 2. Der Knickarmroboter 50 ruht auf einer bodenseitig angeordneten Basis 52. Es ist grundsätzlich auch eine Anordnung mit einem hängenden Roboter vorstellbar. Der Knickarmroboter 50 umfasst eine Mehrzahl von seriell (in Reihe) miteinander gekoppelten Gliedern, im Ausführungsbeispiel handelt es sich um ein auf der Basis ruhendes Karussell 54, eine Schwinge 56, einen Arm 58 und eine Hand 60, die wiederum den Schneidkopf 42 trägt. Andere Gestaltungen des Knickarmroboters 50 bzw. der Handhabungseinrichtungen 40 sind gleichwohl vorstellbar.

Die zu bearbeitenden Verpackungen 20 (Kartons oder dergleichen) sind regelmäßig quaderförmig gestaltet. Eine Umwandung 66 bildet vier Seiten dieses Quaders. Die vier Seiten können als Vorderseite, Rückseite, rechte Seite und linke Seite bezeichnet werden. Ferner umfasst die Verpackung 20 üblicherweise einen Boden. Die Umwandung 66 umgibt eine Öffnung 68. Die Verpackung 20 ist demgemäß bei der Bearbeitung innerhalb der Vorrichtung 10 oben geöffnet. Ein Deckel kann später angebracht werden. Die Verpackung 20 dient zur Aufnahme von Waren 70, die in Fig. 2 gestrichelt dargestellt sind. Aufgabe der Vorrichtung zu 14 ist eine Anpassung einer Bauhöhe der Verpackung 20 an eine gegebene Höhe der Waren 70. Auf diese Weise kann unnötiges Volumen bei den Verpackungen 20 reduziert werden.

Die Umwandung 66 bildet um die Öffnung 68 einen umlaufenden Kragen 72 aus. Mit der Vorrichtung 10 kann ein überstehender Rand 74 entlang einer Trennlinie 76 von der Verpackung 20 abgetrennt werden. Die Trennlinie 76 ist in Fig. 2 lediglich zur Veranschaulichung dargestellt. In Fig. 1 ist der Rand 74 von der Verpackung 20 gelöst. Die Position (Höhenposition) der Trennlinie 76 ist beispielsweise von der gegebenen Füllhöhe mit den Waren 70 abhängig. Die Trennlinie 76 kann insbesondere in Abhängigkeit von der Höhe der Waren 70 bestimmt werden.

Im Ausführungsbeispiel gemäß Fig. 2 ist durch gestrichelte Linien ein mit 80 bezeichnete Bereitstellungsplatz angedeutet. Der Bereitstellungsplatz 80 ist dem Bearbeitungsplatz 38 in der Transferrichtung 32 stromaufwärts vorgelagert. Am Bereitstellungsplatz 80 kann eine Verpackung 20 platziert und mittels einer Erfassungseinrichtung 84 geprüft werden. Die Erfassungseinrichtung 84 umfasst beispielsweise eine Mehrzahl von Sensoren 86, 88, 90, mit denen verschiedene Abmessungen der Verpackung bestimmbar sind.

Die Erfassungseinrichtung 84 dient beispielsweise zu Ermittlung einer Füllhöhe und/oder einer Bauhöhe der Verpackung 20. Dies erfolgt beispielsweise mit dem Sensor 86, der von oben auf die Verpackung 20 blickt. Auf diese Weise kann die Position der Trennlinie 76 definiert werden. Eine oder mehrere der Sensoren 86, 88, 90 können beispielsweise derart mit der Förderbahn 22 zusammenwirken, dass aufgrund der Bewegung der Verpackung 20 in der Transferrichtung 32 entlang des Sensors 86, 88, 90 eine Bestimmung von Abmessungen der Verpackung (beispielsweise Länge oder Breite) ermöglicht ist. Die Sensoren 86, 88, 90 können als Abstandssensoren gestaltet sein, beispielsweise als optische oder kapazitive Abstandssensoren. Die Sensoren 86, 88, 90 können ferner als Lichtschranke oder dergleichen gestaltet sein.

Auf Basis der durch die Erfassungseinrichtung 84 ermittelten Abmessungen der Verpackung 20 kann die Steuereinrichtung 16 eine Bewegungsbahn für den Schneidkopf 42 bestimmen, damit der Kragen 72 der Verpackung 20 entlang der Trennlinie 76 umfänglich (im Sinne von 'vollständig entlang des Umfangs') gekürzt wird.

Es ist grundsätzlich auch vorstellbar, eine oder mehrere Abmessungen der Verpackung 20 am Bearbeitungsplatz 38 zu ermitteln. Dies kann eine kompaktere Gestaltung der Vorrichtung 10 gestatten. Ein separater Bereitstellungsplatz 80 mit dortiger Erfassungseinrichtung 84 zur Erfassung zumindest einer oder mehrerer Abmessungen der Verpackung kann im Umkehrschluss gegebenenfalls die Zykluszeiten reduzieren. Ebenso ist es vorstellbar, einige Abmessungen am Bereitstellungsplatz 80 und andere Abmessungen am Bearbeitungsplatz 38 zu erfassen, um den Prozess weiter zu optimieren.

In den Figuren 1 und 2 ist ferner mit 94 einen Abgabeplatz angedeutet, der zum Ausschleusen von abgetrennten Rändern 74 aus der Vorrichtung 10 dient. Der Abgabeplatz 94 ist im Ausführungsbeispiel seitlich von der Förderbahn 22 beabstandet. Der Abgabeplatz 94 liegt im Bewegungsbereich der Handhabungseinrichtung 40, sodass die Ränder 20 der Verpackungen 20 durch die Handhabungseinrichtungen 40 direkt vom Bearbeitungsplatz 40 hin zum Abgabeplatz 94 bewegt werden können. Sodann können die Ränder 74 dort abgegeben/abgeworfen und in einer Abgaberichtung 96 abgeführt werden. Die nunmehr in ihrer Höhe gekürzten Verpackungen 20 verbleiben in durch die Rollenbahn 22 definierten Transferstrecke.

In Fig. 1 ist ferner innerhalb der Einhausung 14 eine Schärfestation 98 gezeigt, die ebenso Bestandteil der Vorrichtung 10 sein kann. Die Schärfestation 98 erlaubt ein Nachschärfen des am Schneidkopf 42 angeordneten Schneidwerkzeugs 44. Die integrierte Schärfestation 98 liegt im Bewegungsbereich der Handhabungseinrichtung 40, sodass das Schneidwerkzeug 44 zum Nachschärfen nicht vom Schneidkopf 42 oder der Handhabungseinrichtungen 40 abgenommen werden muss. Entsprechende Rüstzeiten können vermieden werden. Das Schneidwerkzeug 44 kann flexibel und schnell nachgeschärft werden, wenn dies erforderlich ist. Die Schärfestation 98 umfasst im Ausführungsbeispiel ein oder zwei rotierbare Werkzeuge, an/zwischen denen das Schneidwerkzeug 44 nachgeschärft werden kann.

Entlang der Förderbahn 22 ist ein Anschlag 102 zur Positionierung und Fixierung der Verpackung 20 für die Bearbeitung am Bearbeitungsplatz 38 vorgesehen. Dies umfasst beispielsweise einen Längsanschlag 104, der vertikal verfahrbar ist, vergleiche den Doppelpfeil 106. In Fig. 2 ist der Längsanschlag 104 in der ausgefahrenen Stellung gezeigt. Eine Verpackung 20, die entlang der Transferrichtung 32 in den Bearbeitungsplatz 38 einfährt, wird dort durch den Längsanschlag 104 gestoppt und gehalten. Ferner sind im Ausführungsbeispiel zwei einander gegenüberliegende Querführungen 108 angeordnet, die auch als rechte und linke Querführung 108 bezeichnet werden können. Zumindest eine der beiden Querführungen 108 kann quer zur Transferrichtung bewegt werden, vergleiche die mit 110 bezeichneten Doppelpfeil in Fig. 2. Auf diese Weise kann die Verpackung 20 seitlich (rechts und links) geführt und geklemmt werden. Grundsätzlich könnte auf diese Weise auch eine Breite (Erstreckung in der Y-Richtung) der Verpackung 20 ermittelt werden.

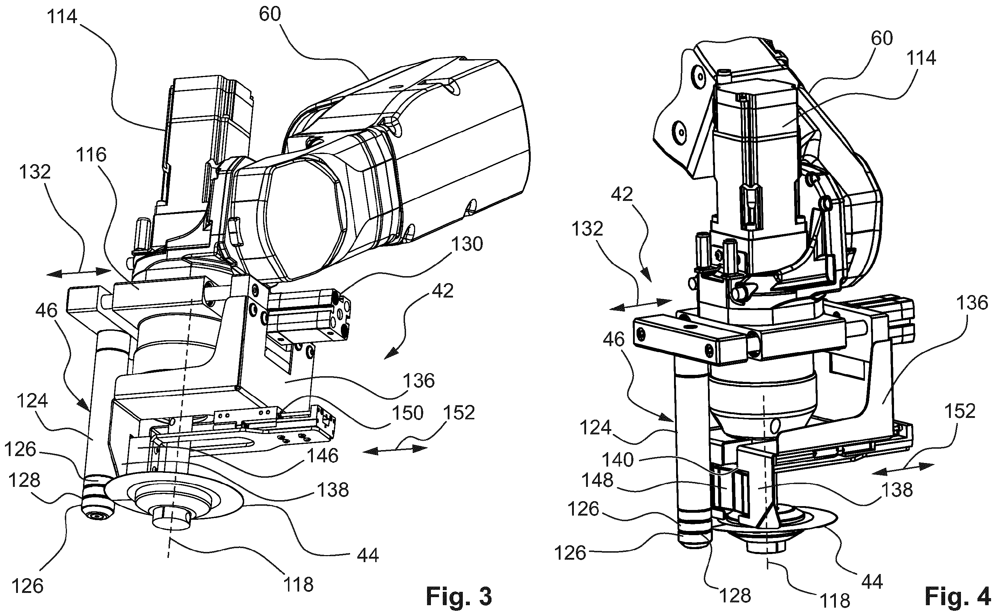

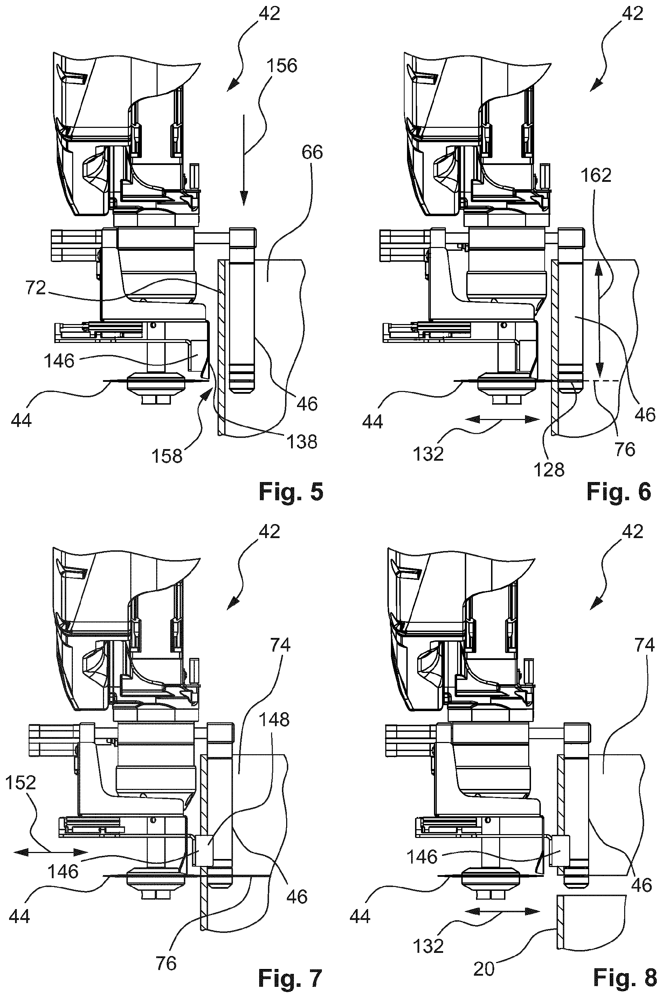

Mit Bezugnahme auf die Figuren 3 und 4 wird eine beispielhafte Ausgestaltung des Schneidkopfes 42 näher veranschaulicht. Die Figuren 3 und 4 zeigen unterschiedliche perspektivische Darstellungen des Schneidkopfes 42, der im Ausführungsbeispiel an der Hand 60 der Handhabungseinrichtung 40 gehalten ist. Die Figuren 5-8 zeigen ergänzend jeweils eine Seitenansicht des Schneidkopfes zur Veranschaulichung verschiedener Betriebszustände/Arbeitsstellung in des Schneidkopfes 42.

Der Schneidkopf 42 umfasst einen Antrieb 114 für das Schneidwerkzeug 44. Der Antrieb 114 ist an einer Basis 116 angeordnet und dazu ausgebildet, das Schneidwerkzeug 44 um eine Rotationsachse 118 anzutreiben. Mit anderen Worten handelt es sich bei dem Schneidwerkzeug 44 im Ausführungsbeispiel um ein rotierendes Messer bzw. eine rotierende Messerscheibe.

Der Gegenhalter 46 weist einen Stab 124 auf, dessen Längserstreckung parallel zur Rotationsachse 118 ist. Am von der Basis 116 abgewandten Ende des Stabes 124 weist der Gegenhalter 46 zwei oder mehr Drehlager 126 auf, deren Drehachsen ebenso parallel zur Rotationsachse 118 sind. Im Ausführungsbeispiel sind die Drehlager 126 leicht voneinander beabstandet, um jeweils zwischen zwei benachbarten Drehlager 126 eine Ausnehmung 128 auszubilden, in die das Schneidwerkzeug 44 einrücken kann.

Die Figuren 3 und 4 zeigen die eingerückte Stellung des Schneidwerkzeugs 44 bezüglich des Gegenhalters 46. Diese Stellung entspricht einer ersten Relativposition zwischen dem Schneidwerkzeug 44 und dem Gegenhalter 46. In dieser Stellung kann der Kragen 72 der Umwandung 66 der Verpackung 20 durch das Schneidwerkzeug 44 durchgeschnitten werden, um den Rand 74 abzutrennen, vergleiche hierzu auch Fig. 6 aus der Folge der Figuren 5-8. Die erste Relativposition ist demgemäß eine angenäherte Position zwischen dem Schneidwerkzeug 44 und dem Gegenhalter 46.

Das Schneidwerkzeug 44 und der Gegenhalter 46 können bedarfsweise auch in eine zweite Relativposition gebracht werden, die einer voneinander beabstandeten Positionen entspricht, vergleiche hierzu Fig. 5 aus der Folge der Figuren 5-8. In der zweiten Relativposition kann der Schneidkopf 42 in eine Arbeitsstellung in Bezug auf die Verpackung 20 gebracht werden.

Die Bewegung zwischen der ersten Relativposition und der zweiten Relativposition wird durch einen Antrieb 130 ermöglicht, der beispielhaft als translatorischer Antrieb gestaltet ist. Ein mit 132 bezeichneter Doppelpfeil in den Figuren 3 und 4 veranschaulicht die mögliche Bewegung zwischen der angenäherten und der beabstandeten Position zwischen dem Schneidwerkzeug 44 und dem Gegenhalter 46. Bei dieser Bewegung wird der Gegenhalter 46 in Bezug auf die Basis 116 bewegt. Das Schneidwerkzeug 44 ist bezüglich der Basis 116 ortsfest positioniert.

Bei der Bewegung (vergleiche den Doppelpfeil 132) wird auch ein Träger 136 mitbewegt, der beispielsweise mit dem Antrieb 130 gekoppelt ist. Am Träger 136 ist ein Führungsschild 138 angeordnet, das im Ausführungsbeispiel benachbart zum Schneidwerkzeug 44 und gegenüber dem Gegenhalter 46 positioniert ist. Mit anderen Worten ist der Führungsschild 138 hinsichtlich der Bewegungsrichtung 132 fest in Bezug auf den Gegenhalter 46 positioniert.

Im Führungsschild 138 ist eine Ausnehmung 140 ausgebildet. Die Öffnung 140 ermöglicht es einem Haltestück 146 mit einem dem Gegenhalter 46 zugewandten Klemmabschnitt 148, relativ zum Gegenhalter 46 durch einen Antrieb 150 zwischen einer eingefahrenen Stellung und einer ausgefahrenen Stellung bewegt zu werden, vergleiche hierzu eine mit 152 bezeichneten Doppelpfeil. Der Antrieb 150 ist beispielhaft als translatorischer Antrieb gestaltet.

In den Figuren 3 und 4 ist das Haltestück 146 in Bezug auf den Gegenhalter 46 in der eingefahrenen Stellung. In der eingefahrenen Stellung ist der Klemmabschnitt 148 vom Gegenhalter 46 beabstandet. In der ausgefahrenen Stellung ist der Klemmabschnitt 148 an den Gegenhalter 46 angenähert. Der Führungsschild 138 und das Haltestück 146 können gemeinsam mit dem Gegenhalter 46 relativ zum Schneidwerkzeug 44 bzw. zu dessen Rotationsachse 118 bewegt werden. Zusätzlich kann das Haltestück 146 relativ zum Führungsschild 138 bzw. relativ zum Gegenhalter 46 bewegt werden. Auf diese Weise ergeben sich verschiedene Betriebszustände für den Schneidkopf 42. Diese werden mit Bezugnahme auf die Figuren 5-8 erläutert.

In dem in Fig. 5 gezeigten Betriebszustand befinden sich das Schneidwerkzeug 44 und der Gegenhalter 46 in der zweiten Relativposition. Das Haltestück ist in der eingefahrenen Stellung. In diesem Betriebszustand kann der Schneidkopf 42 (üblicherweise von oben) in eine Arbeitsstellung in Bezug auf die Verpackung 20 gebracht werden, vergleiche hierzu den Pfeil 156 in Fig. 5. In dieser Betriebsstellung ist der Kragen 72 in einem Spalt 158 zwischen dem Schneidwerkzeug 44 und dem Gegenhalter 46 angeordnet. Der Führungsschild 138 erleichtert diese Einführbewegung.

Ausgehend von der in Fig. 5 gezeigten Stellung veranschaulicht Fig. 6 einen Betriebszustand, in dem der Gegenhalter 46 und das Schneidwerkzeug 44 in die erste Relativposition verbracht sind, in der das Schneidwerkzeug 44 in eine Ausnehmung 128 im Gegenhalter 46 einrückt. Im Ausführungsbeispiel wird der Gegenhalter 46 aktiv durch den Antrieb 130 in Bezug auf die Basis 116 und somit in Bezug auf das Schneidwerkzeug 44 bewegt, vergleiche auch Fig. 3. Auf diese Weise kann der Kragen 72 durchtrennt werden, wenn der Schneidkopf entlang der Trennlinie 76 entlang der Umwandung 66 umfänglich verfahren wird.

Wenn auf diese Weise der Rand 74 vollständig abgetrennt, aber noch nicht von der verbleibenden Verpackung 20 abgehoben wurde, kann der in Fig. 7 gezeigten Betriebszustand eingenommen werden. Dies umfasst eine Bewegung des Haltestücks 146 aus der eingefahrenen Stellung in Bezug auf den Gegenhalter 46 in die ausgefahrene Stellung. In dieser Stellung kann das Haltestück 146 den Rand 74 gegen den Gegenhalter 46 drücken, gegebenenfalls unter Nutzung des Klemmabschnitts 148. Auf diese Weise ist der Rand 74 am Schneidkopf 42 fixiert. Sodann kann der Rand 74 von der Verpackung 20 abgehoben werden. Dies kann in der Betriebsstellung gemäß Fig. 7 oder in der in Fig. 8 gezeigten Betriebsstellung erfolgen, in der der Gegenhalter 46 und das Schneidwerkzeug 44 zueinander die zweite Relativposition einnehmen.

An die in Fig. 8 gezeigte Betriebsstellung kann sich wiederum die in Fig. 5 gezeigte Betriebsstellung anschließen, in der das Haltestück 146 in die eingefahrene Stellung bewegt ist. Wenn zusätzlich die zweite Relativposition zwischen dem Schaltwerkzeug 44 und dem Gegenhalter 46 vorliegt, kann der Rand 74 vom Schneidkopf 42 abgeworfen werden und/oder der Schneidkopf 42 kann in Bezug auf eine weitere Verpackung 20 in die Arbeitsstellung gebracht werden.

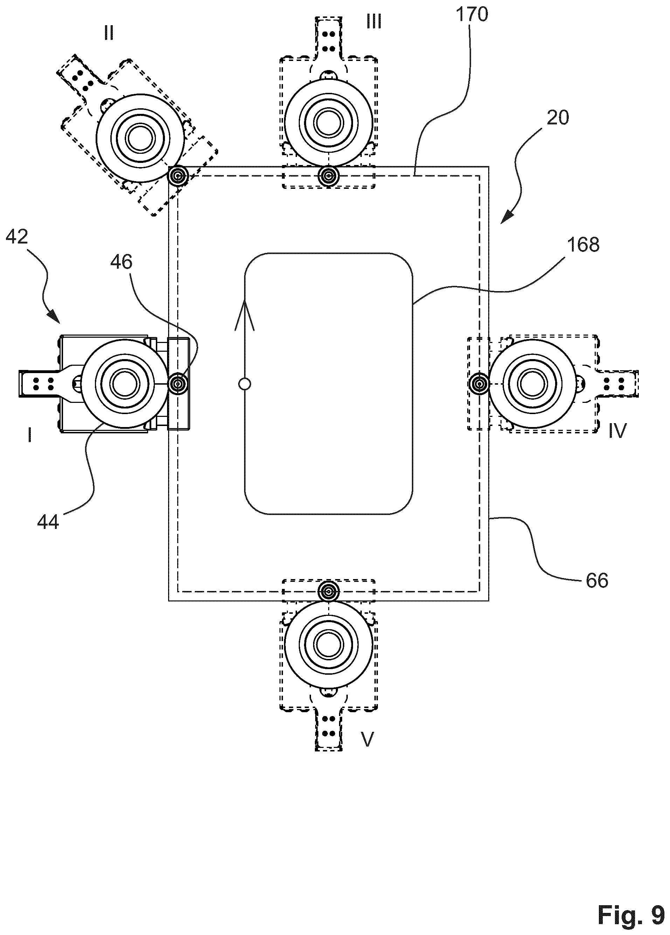

Fig. 9 veranschaulicht anhand einer schematischen Darstellung (von unten her) eine denkbare Bewegungsbahn 170 des Schneidkopfes 42 bei der Bewegung entlang eines Umfangs der Umwandung 46 der Verpackung 20. Ein Umlauf und die Richtung der Bewegung werden durch einen mit 168 bezeichneten geschlossenen Pfeil angedeutet. Die in Fig. 9 durch eine gestrichelte Linie dargestellte Bewegungsbahn 170 bezieht sich auf ein Zentrum des Gegenhalters 46 (zum Beispiel Drehachse des Lagers 126). Im Ausführungsbeispiel ist der Gegenhalter 46 innerhalb der Umwandung 66 angeordnet. Der Schneidkopf 42 wird in den vier Ecken der Verpackung 20 jeweils in Bezug auf dieses Zentrum um 90° verschwenkt, vergleiche den Übergang bei II zwischen der Ausgangsposition I und der Stellung III in Fig. 9. Die Positionen I-V veranschaulichen den Umlauf des Schneidkopfes 42 um den Kragen 72 der Verpackung 20.

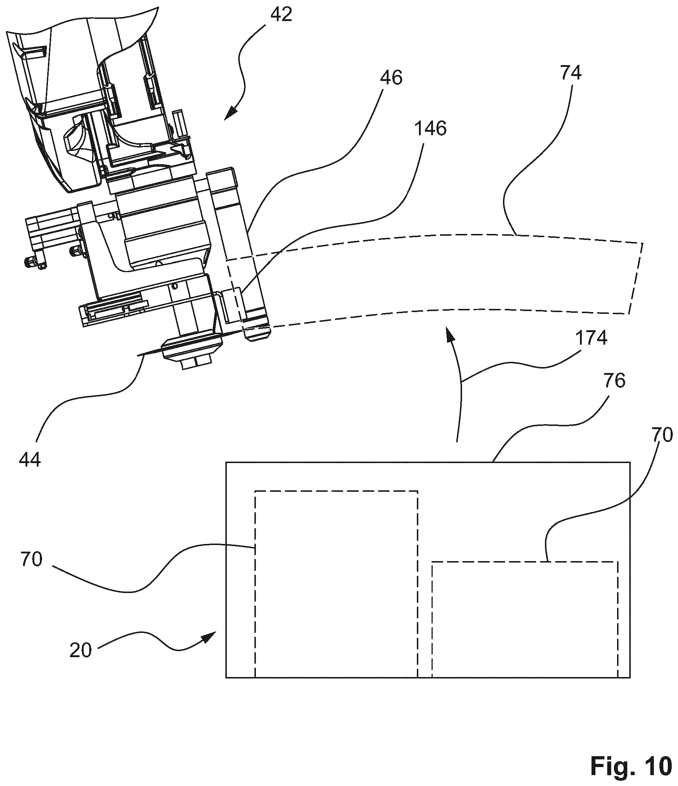

Fig. 10 veranschaulicht anhand einer schematischen Darstellung das Abheben des an der Trennlinie 76 abgetrennten Rands 74 von der verbliebenen Verpackung 20, vergleiche hierzu auch einen mit 174 bezeichneten gekrümmten Pfeil. Die neue Höhe der Verpackung 20 ist an die Höhe der darin aufgenommenen Waren 70 angepasst. Der überschüssige Rand 76 kann durch den Schneidkopf 42 abgehoben und am Abgabeplatz 94 (vergleiche Fig. 1 und Fig. 2) abgegeben werden. Am Schneidkopf 42 wird der Kragen 74 zwischen dem ausgefahrenen Haltestück 146 und dem Gegenhalter 46 festgehalten. Je nach eingenommener Relativposition in Bezug auf den Gegenhalter 46 kann auch das Schneidwerkzeug 44 dazu beitragen, den Rand 74 am Schneidkopf 42 zu sichern.

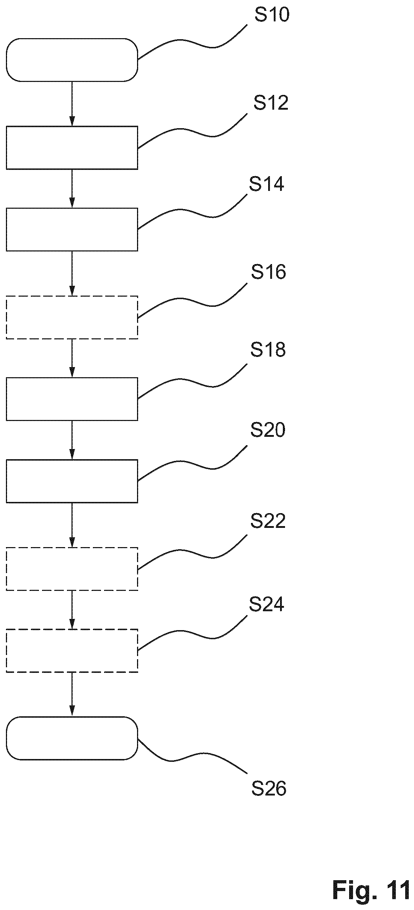

Mit Bezugnahme auf Fig. 11 wird anhand eines vereinfachten Blockdiagramms eine beispielhafte Ausgestaltung eines Verfahrens zur Höhenreduzierung bei Verpackungen, insbesondere bei Umverpackungen aus Karton, veranschaulicht. Das Verfahren startet im Ausführungsbeispiel bei einem Schritt S10 und endet bei einem Schritt S26.

In einem Schritt S12 wird eine Handhabungseinrichtung bereitgestellt, die einen Schneidkopf trägt, der einerseits dazu befähigt ist, einen Rand von der Verpackung abzuschneiden, und der andererseits dazu befähigt ist, den abgetrennten Rand festzuhalten und von der verbliebenen Verpackung abzuführen. Zu diesem Zweck weist der Schneidkopf ein Schneidwerkzeug und einen Gegenhalter auf, zwischen denen beim Trennvorgang ein Kragen der Verpackung angeordnet ist. Der Gegenhalter dient beim Schneidvorgang als Gegenlager, um sicherzustellen, dass das Material der Verpackung nicht oder nicht übermäßig ausweicht.

In einem Schritt S14 wird eine zu bearbeitende Verpackung zu Zwecken der Höhenreduzierung der Handhabungsrichtung zugeführt. Die Verpackung wird in einen Bewegungsbereich der Handhabungseinrichtungen eingebracht, indem diese den Schneidkopf vollständig um den Kragen der Verpackung herumführen kann.

Es kann sich ein optionaler Schritt S16 anschließen, der eine Erfassung einer Füllhöhe innerhalb der Verpackung umfasst. Dies kann beispielsweise durch Ermittlung der Höhe von Waren innerhalb der Verpackung erfolgen. Auf diese Weise kann ermittelt werden, welche Höhe die Verpackung benötigt, und wie hoch der gegebenenfalls abzutrennende Rand ist. Der Schritt S16 kann dem Schritt S14 auch vorgelagert sein.

In einem weiteren Schritt S18 bewegt die Handhabungseinrichtungen den Schneidkopf in eine Arbeitsstellung, in der eine Umwandung der Verpackung zwischen dem Schneidwerkzeug und dem Gegenhalter angeordnet ist. Es schließt sich in einem nachfolgenden Schritt S20 ein Verfahren des Schneidkopfes entlang des Kragens der Verpackung an, wobei das Schneidwerkzeug den Kragen entlang einer Trennlinie auftrennt, um einen Rand vom Kragen abzutrennen. Zu diesem Zweck wird das Schneidwerkzeug beispielsweise rotatorisch angetrieben. Ein Abstand zwischen dem Schneidwerkzeug und dem Gegenhalter kann zwischen einer ersten Relativposition und einer zweiten Relativposition verändert werden, um einerseits eine Positionierung des Schneidkopfes in der Arbeitsstellung und andererseits den durchtrennenden Eingriff des Schneidwerkzeugs in das Material der Verpackung zu ermöglichen.

In einem sich optional anschließenden Schritt S22 wird der abgetrennte Rand durch den Schneidkopf von der verbliebenen Verpackung wegbewegt. Der Rand kann als geschlossener Ring vorliegen und auch in dieser Gestalt gehandhabt werden. Dies kann gezielte Maßnahmen zum Festhalten des Rands am Schneidkopf umfassen, beispielsweise eine Aktivierung eines zusätzlichen Haltestücks, das den Rand gegen den Gegenhalter drückt.

Ein weiterer optionaler Schritt S24 umfasst die Abgabe des Rands durch den Schneidkopf bei einem Abgabeplatz. Dies kann beispielsweise ein Abwerfen unter Nutzung von Schwerkraft umfassen, wenn der Schneidkopf in einen Zustand gebracht wird, in dem ein Spalt zwischen dem Gegenhalter und dem Haltestück (bzw. dem Schneidwerkzeug) groß genug ist, damit der Rand herausfallen kann.

Das Verfahren endet im Ausführungsbeispiel bei einem Schritt S26.

## Patentansprüche

1. Vorrichtung (10) zur Höhenreduzierung von dünnwandigen Verpackungen (20), insbesondere von Umverpackungen aus Karton, die Folgendes aufweist:
- einen Bearbeitungsplatz (38) für eine Verpackung (20), die eine Umwandung (66) aufweist, die einen Kragen (72) ausbildet, der eine Öffnung (68) der Verpackung (20) begrenzt,
- eine Handhabungseinrichtung (40), insbesondere eine robotische Handhabungseinrichtung (40),
- einen an der Handhabungseinrichtung (40) gehaltenen Schneidkopf (42), der von der Handhabungseinrichtung (40) in zumindest zwei Achsen verfahrbar ist, um einen überschüssigen Rand (74) des Kragens (72) von der Verpackung (20) zu trennen,
- eine Steuereinrichtung (16) zur Steuerung der Handhabungseinrichtung (40) und des Schneidkopfes (42),
- ein motorisch antreibbares Schneidwerkzeug (44) und einen Gegenhalter (46), die am Schneidkopf (42) gehalten und relativ zueinander zwischen einer ersten Relativposition und einer zweiten Relativposition verfahrbar sind,
wobei das Schneidwerkzeug (44) und der Gegenhalter (46) in der ersten Relativposition einander angenähert sind, um durch eine schneidende Bewegung des Schneidwerkzeugs (44) den Rand (74) vom Kragen (72) abzutrennen, und
wobei das Schneidwerkzeug (44) und der Gegenhalter (46) in der zweiten Relativposition voneinander beabstandet sind, sodass der Schneidkopf (42) in eine Arbeitsstellung in Bezug auf die Verpackung (20) bringbar ist, in der der Kragen (72) der Verpackung (20) zwischen dem Schneidwerkzeug (44) und dem Gegenhalter (46) angeordnet ist,
**dadurch gekennzeichnet, dass** in der ersten Relativposition zwischen dem Schneidwerkzeug (44) und dem Gegenhalter (46) der von der Verpackung (20) getrennte Rand (74) zwischen dem Schneidwerkzeug (44) und dem Gegenhalter (46) gehalten und insbesondere gegen ein Herausrutschen gesichert ist.

2. Vorrichtung (10) nach Anspruch 1, **gekennzeichnet durch** einen Abgabeplatz (94) zur Abgabe des von der Verpackung (20) getrennten Rands (74), wobei die Handhabungseinrichtung (40) dazu ausgebildet ist, den Schneidkopf (42) zwischen dem Bearbeitungsplatz (38) und dem Abgabeplatz (94) zu verfahren, und wobei das Schneidwerkzeug (44) und der Gegenhalter (46) am Abgabeplatz (94) in die zweite Relativposition bringbar sind, um dort den Rand (74) freizugeben.

3. Vorrichtung (10) nach Anspruch 1 oder 2, **dadurch gekennzeichnet, dass** das Schneidwerkzeug (44) in der ersten Relativposition in eine Ausnehmung (128) im Gegenhalter (46) eintaucht.

4. Vorrichtung (10) nach einem der Ansprüche 1-3, **dadurch gekennzeichnet, dass** der Gegenhalter (46) stabförmig gestaltet ist und bei seinem freien Ende zwei oder mehr Drehlager (126) aufweist, die insbesondere zur Bereitstellung zumindest einer Ausnehmung (128) zueinander versetzt sind.

5. Vorrichtung (10) nach einem der Ansprüche 1-4, **dadurch gekennzeichnet, dass** der Schneidkopf (42) ferner ein Haltestück (146) trägt, das zwischen einer eingefahrenen Stellung und einer ausgefahrenen Stellung relativ zum Gegenhalter (46) verfahrbar ist, wobei das Haltestück (146) in der ausgefahrenen Stellung an den Gegenhalter (46) angenähert ist, um den Rand (74) der Verpackung (20) in einem Spalt (158) zwischen dem Haltestück (146) und dem Gegenhalter (46) zu sichern.

6. Vorrichtung (10) nach Anspruch 5, **dadurch gekennzeichnet, dass** das Haltestück (146) einen Klemmabschnitt (148) aufweist, der dazu ausgebildet ist, in der ausgefahrenen Stellung des Haltestücks (146) den Rand (74) gegen den Gegenhalter (46) zu drücken.

7. Vorrichtung (10) nach Anspruch 5 oder 6, **dadurch gekennzeichnet, dass** das Haltestück (146) während des Trennvorgangs in der eingefahrenen Stellung ist, und zur Handhabung des Rands (74) in die ausgefahrene Stellung verfahrbar ist.

8. Vorrichtung (10) nach Anspruch 7, **dadurch gekennzeichnet, dass** das Haltestück (146) zur Abgabe des von der Verpackung (20) getrennten Rands (74) aus der ausgefahrenen Stellung in die eingefahrene Stellung verfahrbar ist.

9. Vorrichtung (10) nach einem der Ansprüche 1-8, **gekennzeichnet durch** eine Erfassungseinrichtung (84), insbesondere eine Erfassungseinrichtung (84) mit einem oder mehreren optischen Sensoren (86, 88, 90), zur Erfassung einer Bauhöhe der Verpackung (20) und zur Erfassung einer Füllhöhe innerhalb der Verpackung (20), wobei die Steuereinrichtung (16) dazu ausgebildet ist, in Abhängigkeit von der Bauhöhe und der Füllhöhe eine Höhe (162) des abzutrennenden Rands (74) der Verpackung (20) zu ermitteln und den Schneidkopf (42) entsprechend mit der Handhabungseinrichtung (40) zu positionieren, und wobei die Erfassungseinrichtung (84) insbesondere ferner zur Ermittlung weiterer Abmessungen der Verpackung (20), vorzugsweise zur Erfassung einer Breite und einer Länge, ausgebildet ist.

10. Vorrichtung (10) nach Anspruch 9, **gekennzeichnet durch** einen Bereitstellungsplatz (80) für Verpackungen (20), der dem Bearbeitungsplatz (38) vorgelagert ist, wobei am Bereitstellungsplatz (80) mit der Erfassungseinrichtung (84) zumindest eine oder mehrere Abmessungen der Verpackung (20) ermittelt werden, bevor die Verpackung (20) zum Bearbeitungsplatz (38) transferiert wird.

11. Vorrichtung (10) nach einem der Ansprüche 1-10, **gekennzeichnet durch** eine Förderbahn (22), insbesondere eine Rollenbahn (24), zum Transfer von Verpackungen (20), wobei entlang der Förderbahn (22) zumindest ein Anschlag (102) angeordnet ist, der zwischen einer eingerückten und einer ausgerückten Stellung verfahrbar ist, um eine zu bearbeitende Verpackung (20) bedarfsweise am Bearbeitungsplatz (38) anzuhalten.

12. Vorrichtung (10) nach Anspruch 11, **dadurch gekennzeichnet, dass** entlang der Förderbahn (22) ein Längsanschlag (104) angeordnet ist, der insbesondere vertikal zwischen einer in die Förderbahn eingefahrenen Position (22) und einer aus der Förderbahn (22) ausgefahrenen Position verfahrbar ist.

13. Vorrichtung (10) nach Anspruch 11 oder 12, **dadurch gekennzeichnet, dass** entlang der Förderbahn (22) zwei einander zugewandte Querführungen (108) angeordnet sind, deren Abstand durch eine Bewegung zumindest einer der beiden Querführungen (108) veränderbar ist, um Verpackungen (20) zwischen den beiden Querführungen (108) festzuhalten oder freizugeben.

14. Vorrichtung (10) nach einem der Ansprüche 1-13, **gekennzeichnet durch** eine Schärfestation (98) zum Schärfen des Schneidwerkzeugs (44), wobei die Schärfestation (98) innerhalb des Bewegungsbereichs der Handhabungseinrichtung (40) und insbesondere innerhalb einer Einhausung (14) der Vorrichtung (10) angeordnet ist.

15. Verfahren zur Höhenreduzierung von dünnwandigen Verpackungen (20), insbesondere von Umverpackungen aus Karton, mit den folgenden Schritten:
- Bereitstellung einer Handhabungseinrichtung (40), insbesondere einer robotischen Handhabungseinrichtung (40), zur Bewegung eines an der Handhabungseinrichtung (40) gehaltenen Schneidkopfes (42) in zumindest zwei Achsen,
wobei am Schneidkopf (42) ein motorisch antreibbares Schneidwerkzeug (44) und ein Gegenhalter (46) gehalten und relativ zueinander zwischen einer ersten Relativposition und einer zweiten Relativposition verfahrbar sind,
wobei das Schneidwerkzeug (44) und der Gegenhalter (46) in der ersten Relativposition einander angenähert sind, und
wobei das Schneidwerkzeug (44) und der Gegenhalter (46) in der zweiten Relativposition voneinander beabstandet sind,
- Bereitstellung einer Verpackung (20) an einem Arbeitsplatz, die eine Umwandung (66) mit einer oder mehreren Seitenwänden aufweist, die einen Kragen (72) ausbildet, der eine Öffnung (68) der Verpackung (20) begrenzt,
- Bewegen des Schneidkopfes (42) in eine Arbeitsstellung in Bezug auf die Verpackung (20), in der der Kragen (72) der Verpackung (20) zwischen dem Schneidwerkzeug (44) und dem Gegenhalter (46) angeordnet ist, in der zweiten Relativposition zwischen dem Schneidwerkzeug (44) und dem Gegenhalter (46), und
- Verfahren des sich in der Arbeitsstellung befindenden Schneidkopfes (42) entlang des Kragens (72), um durch eine schneidende Bewegung des Schneidwerkzeugs (44) einen überschüssigen Rand (74) des Kragens (72) von der Verpackung (20) zu trennen, in der ersten Relativposition zwischen dem Schneidwerkzeug (44) und dem Gegenhalter (46),
**dadurch gekennzeichnet, dass** in der ersten Relativposition zwischen dem Schneidwerkzeug (44) und dem Gegenhalter (46) der von der Verpackung (20) getrennte Rand (74) zwischen dem Schneidwerkzeug (44) und dem Gegenhalter (46) gehalten und insbesondere gegen ein Herausrutschen gesichert ist.
